# EUROPÄISCHE PATENTSCHRIFT

(11) **EP 2 719 311 B1**
(45) Veröffentlichungstag und Bekanntmachung des Hinweises auf die Patenterteilung: **15.06.2016**
(21) Anmeldenummer: 13179278.0
(22) Anmeldetag: 05.08.2013
(51) Int. Cl.: A47J 31/44

(54) **Wassertank für ein Haushaltsgerät und Haushaltsgerät**
Water tank for a household appliance and household appliance
Réservoir d'eau pour un appareil ménager et appareil ménager

(30) Priorität: 15.10.2012 DE 202012103939 U
(43) Veröffentlichungstag der Anmeldung: 16.04.2014
(73) Patentinhaber: Melitta Europa GmbH & Co. KG, 32427 Minden (DE)
(72) Erfinder: Sachtleben, Andreas, 32427 Minden (DE)
(74) Vertreter: Dantz, Jan Henning

(56) Entgegenhaltungen:
- EP-A2- 1 154 246
- DE-U- 1 961 713
- US-A- 3 715 974
- US-A- 5 447 248
- US-A1- 2009 139 324

## Beschreibung

Die vorliegende Erfindung betrifft einen Wassertank für ein Haushaltsgerät, insbesondere für die Getränkezubereitung, mit einem Tankbehälter, der einen Boden und Seitenwände aufweist, wobei an mindestens einer Seitenwand eine Füllstandsmarkierung vorgesehen ist.

Es gibt Geräte für die Getränkezubereitung, bei denen ein Tankbehälter mit einer Füllstandsanzeige versehen ist. Der Tankbehälter kann aus transparentem Kunststoff hergestellt sein und die Füllstandsanzeige wird dann durch Drucken oder durch Heißprägen nachträglich aufgebracht. Die Herstellungsschritte des Druckens und des Heißprägens sind allerdings relativ aufwändig, um dann eine lesbare Füllstandsmarkierung aufzubringen. Zudem ist eine solche Füllstandsanzeige optisch wenig ansprechend.

DE 19 61 713 U offenbart einen aus Kunststoff bestehenden Wasserbehälter für Kochendwassergeräte. Dieser ist mit einem in vertikaler Richtung verlaufenden Streifen versehen, der als Anzeigeskala dient. Dabei ist vorgesehen, dass der Streifen durchsichtig ist. Dafür wird an dieser Stelle das Material ausgedünnt. Zudem wird der Streifen mit waagerecht verlaufenden Rippen versehen, um die verdünnt ausgebildete Stelle zu verstärken. Der Abstand der Rippen zueinander ist dabei so bemessen, dass die Rippen gleichzeitig als Wasserstandskale dienen.

EP 1 154 246 offenbart eine Füllstandsanzeige mit Lichtquelle. Durch einen optischen Effekt, der im Grenzbereich zwischen zwei Medien auftritt, wird der Füllstand eines Mediums angezeigt. Eine Lichtquelle ist optisch an ein Anzeigemittel gekoppelt, um die Erkennbarkeit der Grenzfläche zwischen dem ersten und zweiten Medium zu verbessern. Als Anzeigemittel ist dabei ein Rohr mit einem Innenkanal vorgesehen, sodass das Rohr lichtdurchlässig ist. Die Lichtquelle ist an den Innenkanal angeschlossen. Zudem ist im Innenkanal ein Schwimmkörper vorgesehen, der Licht seitlich nach außen abgibt.

Es ist daher Aufgabe der vorliegenden Erfindung, einen Wassertank mit einer Füllstandsmarkierung bereitzustellen, der einfach hergestellt ist und optisch ansprechend aussieht.

Diese Aufgabe wird mit einem Wassertank mit den Merkmalen des Anspruches 1 sowie einem Haushaltsgerät mit einem entsprechenden Wassertank gelöst.

Erfindungsgemäß wird die Füllstandsmarkierung integral mit der Seitenwand des Tankbehälters durch eine Profilierung gebildet, die beispielsweise bei formgebenden Verfahren für den Tankbehälter, wie dem Spritzgussverfahren, auf einfache Weise hergestellt werden kann. Dadurch entfällt ein Nachbearbeitungsschritt, wie er durch das Bedrucken oder das Heißprägen vorgenommen wird. Zudem ergeben sich durch das Profilieren der Seitenwand optisch ansprechende Effekte durch Lichtlenkung.

Gemäß einer bevorzugten Ausgestaltung der Erfindung ist an der Profilierung ist mindestens eine in einem Winkel größer 30°, insbesondere größer 45°, zur Ebene der Seitenwand ausgerichtet Oberfläche vorgesehen. Dadurch bleibt die Profilierung gut sichtbar, indem die Lichtbrechung deutlich von der übrigen ebenen Oberfläche der Seitenwand abweicht. Die Profilierung ist dabei durch eine nutförmige Aussparung ausgebildet, bei der ein Teil der Oberfläche im Wesentlichen rechtwinklig zur Ebene der Seitenwand ausgebildet ist. Die nutförmige Aussparung kann dabei eine konkave Wölbung aufweisen, so dass eine gezielte Lichtlenkung auch im Bodenbereich der Aussparung erfolgt.

Für eine effektive Herstellung kann der Tankbehälter aus Kunststoff im Spritzgussverfahren hergestellt sein. Dabei wird als Kunststoffmaterial ein transparentes oder transluzentes Material gewählt, zumindest im Bereich der Seitenwand mit den Füllstandsmarkierungen. Die Seitenwand kann dabei eine Dicke zwischen 2 bis 4 mm besitzen, wobei die Tiefe oder Höhe der Profilierung in einem Bereich zwischen 0,2 bis 1 mm, insbesondere 0,4 bis 0,7 mm, liegt. Die Profilierung kann auch nach außen hervorstehend ausgebildet sein statt als Aussparung. Ferner kann die Profilierung an der Innenseite oder an der Außenseite vorgesehen werden, wobei aus Gründen der Reinigung eine Anordnung an der Außenseite vorteilhaft ist.

Gemäß einer weiteren Ausgestaltung der Erfindung wird ein Haushaltsgerät, insbesondere für die Zubereitung von Heißgetränken, bereitgestellt, bei dem ein erfindungsgemäßer Wassertank vorgesehen ist. Dabei kann das Haushalts¬gerät mindestens ein Leuchtmittel aufweisen, das Licht in eine Seitenwand des Tankbehälters zur Beleuchtung der Füllstandsmarkierung einstrahlt. Zur besseren Verteilung des Lichts kann dabei zwischen dem Wassertank und dem Leuchtmittel ein Lichtleiter angeordnet sein. Über den Lichtleiter ist es.möglich, gezielt einen streifenförmigen Abschnitt an den Tankbehälter zu illuminieren, an dem die Füllstandsmarkierungen in Form von Profilierungen vorgesehen sind.

Das Licht wird in einer vorteilhaften Ausgestaltung in Wesentlichen in Richtung der Ebene der Seitenwand mit den Füllstandsmarkierungen eingestrahlt, wobei durch die Profilierungen der Füllstandsmarkierungen das Licht dann in einem Winkel zwischen 30° bis 150°, insbesondere 45° bis 135°, zur Ebene der Seitenwand emittiert wird, um eine besonders ansprechende Optik bereitzustellen, die auch aus größerer Entfernung gut sichtbar bleibt.

Die Erfindung wird nachfolgend anhand eines Ausführungsbeispiels mit Bezug auf die beigefügten Zeichnungen näher erläutert. Es zeigen:

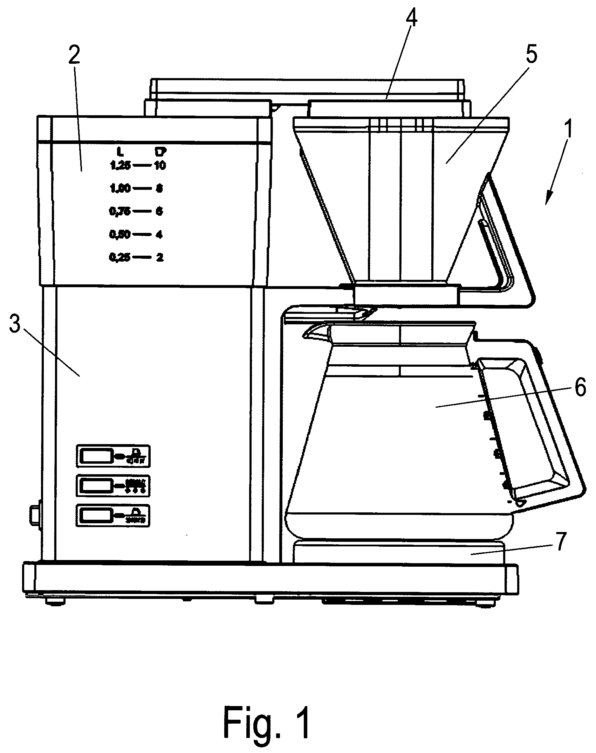

- Figur 1: eine Seitenansicht eines erfindungsgemäßen Haushaltsgerätes mit einem Wassertank;
- Figur 2: eine Seitenansicht des Wassertanks des Haushaltsgerätes der Figur 1;
- Figur 3: eine geschnittene Ansicht des Wassertanks der Figur 2;
- Figur 4: eine vergrößerte Detailansicht einer Profilierung an dem Wassertank;
- Figur 5: eine schematische Ansicht der Lichtlenkung an der Profilierung der Figur 4;
- Figur 6: eine geschnittene Detailansicht des Wassertanks der Figur 1 im unteren Bereich des Wassertanks;
- Figur 7: eine Seitenansicht des Wassertanks der Figur 1, teilweise im Schnitt, und
- Figur 8: eine geschnittene Detailansicht der Lichteinleitung in den Wassertank.

Ein Haushaltsgerät 1 in Form einer Kaffeemaschine umfasst einen Tankbehälter 2 zum Einfüllen von Wasser, der in Verbindung mit einer Brüheinheit 3 steht, über die das geförderte Wasser über eine Leitung 4 in einen Filterhalter 5 eingeleitet wird. Unter dem Filterhalter 5 ist eine Kanne 6 für den frisch gebrühten Kaffee angeordnet, die auf einer Warmhalteplatte 7 abgestellt ist.

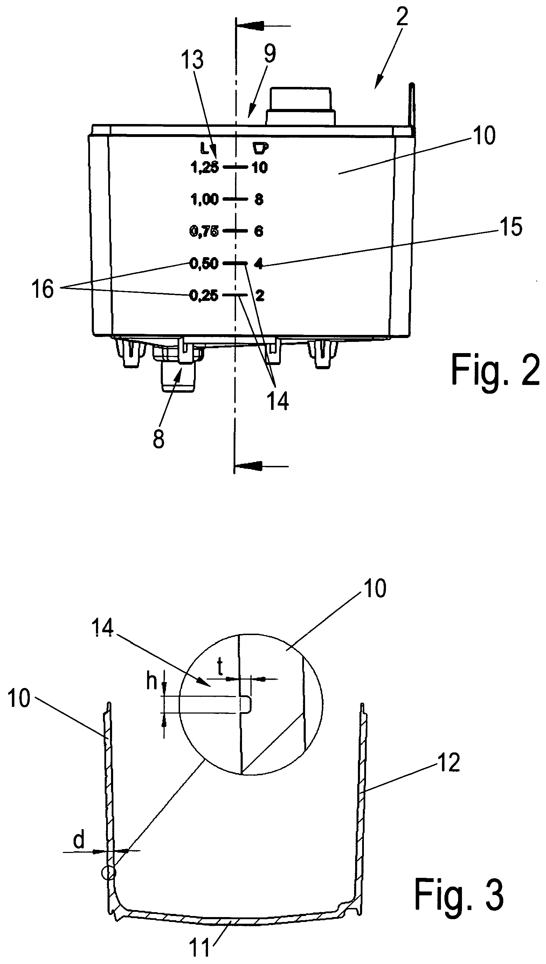

Wie in der vergrößerten Darstellung der Figur 2 erkennbar ist, besitzt der Tankbehälter 2 an einer Seitenwand 10 Füllstandsmarkierungen 13. An einem Bodenbereich des Tankbehälters 2 sind Befestigungsvorsprünge 8 vorgesehen, um den Tankbehälter 2 an der Brüheinheit 3 positionsgenau montieren zu können. An der Oberseite ist der Tankbehälter 2 mit einer Einfüllöffnung 9 versehen.

Die Füllstandsmarkierungen 13 sind durch Profilierungen gebildet, die als nutförmige Aussparungen ausgebildet sind. Dabei werden als Füllstandsmarkierungen 14 einfache Striche eingesetzt, während benachbart Ziffern 15 angeordnet sind, die eine Tassenzahl für die Brühmenge angeben. Weitere Füllstandsmarkierungen sind durch Ziffern 16 gebildet, die die Wassermenge in Litern angeben. Die Art der Füllstandsmarkierung kann je nach landestypischen Gewohnheiten an der Seitenwand 10 ausgebildet sein.

Wie in Figur 3 zu sehen ist, umfasst der Tankbehälter 2 eine Seitenwand 10 mit den Füllstandsmarkierungen 13 sowie eine gegenüberliegende Seitenwand 12, die keine Füllstandsmarkierung aufweist, wobei optional Füllstandsmarkierungen 13 auch an mehreren Seitenwänden 10 vorgesehen werden können. Die Seitenwände 10 und 12 sind über einen Bodenabschnitt 11 miteinander verbunden.

Der Tankbehälter 2 besteht aus einem transparenten oder transluzenten Kunststoff und ist vorzugsweise im Spritzgussverfahren hergestellt. Dabei ist die Wanddicke d der Seitenwand 10 mit den Füllstandsmarkierungen 13 in einem Bereich zwischen 2 bis 4 mm ausgebildet, während die Tiefe der Profilierungen 14 für die Füllstandmarkierungen in einem Bereich zwischen 0,2 bis 1 mm, insbesondere 0,4 bis 0,7 mm, liegt. Die Breite s der Profilierungen 14 liegt ebenfalls in einem Bereich zwischen 0,2 bis 1,4 mm, insbesondere 0,4 bis 1 mm.

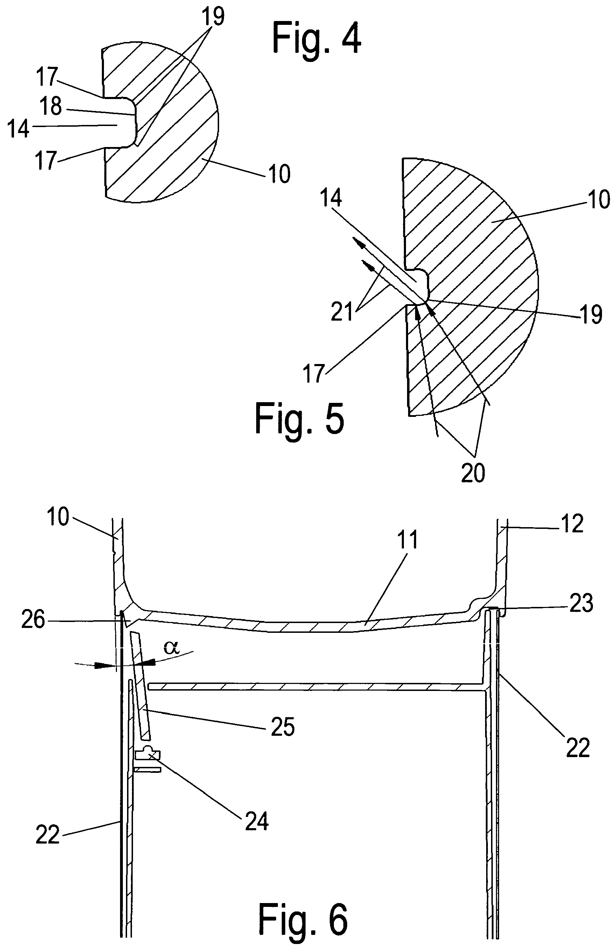

In Figur 4 ist eine Profilierung 14 einer Füllstandsmarkierung 13 im Schnitt vergrößert dargestellt. Die Profilierung 14 ist als nutförmige Aussparung ausgebildet, die zwei Seitenwände 17 umfasst, die im Wesentlichen rechtwinklig zu einer Oberfläche der Seitenwand 10 ausgerichtet sind. Beide Seitenwände 17 sind über eine Wölbung 19 mit einem Boden 18 der Profilierung verbunden. Dadurch wird ein kantenförmiger eckiger Übergang zwischen Seitenwand 17 und Boden 18 vermieden. Wie in Figur 5 gezeigt ist, werden einfallende Lichtstrahlen 20, die durch eine Lichtquelle generiert werden, im Bereich der Seitenwand 17 und der Wölbung 19 im Bereich der Grenzfläche, also der Oberfläche der Seitenwand 17 und der Wölbung 19, gebrochen. Dadurch treten die Lichtstrahlen 21 im Wesentlichen parallel gebündelt zu dem Betrachter aus und dieser nimmt die Profilierung 14 besser wahr, da die Seitenwand 17 und die Wölbung 19 heller erscheinen als die Umgebung.

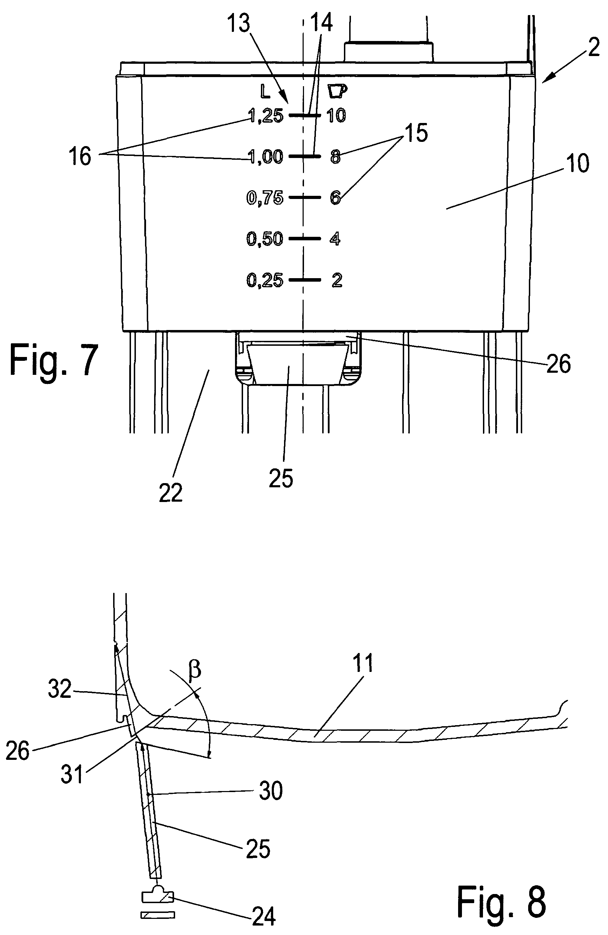

In den Figuren 6 und 7 ist der Boden 11 des Tankbehälters 2 in der eingebauten Position dargestellt. Innerhalb der Brüheinheit 3 ist ein Leuchtmittel 24 in Form einer Leuchtdiode vorgesehen, das Licht in einen plattenförmigen Lichtleiter 25 einstrahlt. Der plattenförmige Lichtleiter 25 leitet das Licht zu einem Vorsprung 26 am Boden 11 des Tankbehälters 2, wobei der Lichtleiter 25 in einem Winkel α zur Ebene der Seitenwand 10 ausgerichtet ist, so dass das einfallende Licht leicht nach außen abstrahlt. Der Winkel α liegt vorzugsweise in einem Bereich zwischen 1° und 20°, insbesondere 5° bis 15°. Durch die Anordnung des Leuchtmittels 24 und des Lichtleiters 25 innerhalb der Brüheinheit 3 kann eine Gehäusewand 22 der Brüheinheit 3 zur Abstützung des Tankbehälters 2 dienen, wobei die Gehäusewand 22 in eine nutförmige Aufnahme am Boden 11 eingreift. Unterhalb der Seitenwand 12 sind ebenfalls eine Aufnahme 23 für eine Gehäusewand 22 sowie ein Montagevorsprung angeordnet.

Wie in Figur 7 erkennbar ist, befindet sich der Lichtleiter 25 lediglich unterhalb der Füllstandsmarkierungen 13, so dass das Licht von unten im Wesentlichen streifenförmig über einen Teilabschnitt der Seitenwand 10 eingestrahlt wird. Dadurch werden die Lesbarkeit und der Kontrast zur den umgebenden Bereichen noch vergrößert.

In Figur 8 ist schematisch der Weg der Lichtstrahlen von dem Leuchtmittel 24 eingezeichnet. Ein Lichtstrahl 30 gelangt von dem Leuchtmittel 24 in den Lichtleiter 25 und wird an der stirnseitigen Austrittsfläche des Lichtleiters 25 gebrochen. Beim Eintritt in den Vorsprung 26 an der Unterseite des Tankbehälters 2 erfolgt eine weitere Brechung, wobei ein Lichtstrahl 32 zu den Füllstandsmarkierungen 13 geleitet wird. Dort trifft er auf die Profilierungen und wird beim Austritt aus dem Tankbehälter 2 ein weiteres Mal gebrochen. Um eine möglichst verlustarme Einleitung von dem Lichtleiter 25 in den Tankbehälter 2 zu ermöglichen, ist die Austrittsfläche an dem Lichtleiter 25 und die Eintrittsfläche an dem Vorsprung 26 in einem Winkel β angeordnet, der abhängig ist von den Brechungsindizes der Materialien und beispielsweise in einem Bereich zwischen 10° und 45° liegen kann.

In dem dargestellten Ausführungsbeispiel wird der Tankbehälter 2 nur im Bereich der Füllstandsmarkierungen 13 beleuchtet. Es ist natürlich auch möglich, eine großflächigere Beleuchtung des Tankbehälters 2 vorzunehmen, um besondere optische Effekte zu erzielen. Zudem kann die Lichteinleitung statt von unten auch von oben oder von der Seite erfolgen, um entsprechende Füllstandsmarkierungen optisch hervorzuheben.

In dem dargestellten Ausführungsbeispiel wurde der Tankbehälter als Bestandteil einer Kaffeemaschine eingesetzt. Der Tankbehälter 2 kann natürlich auch für andere Haushaltsgeräte, insbesondere für die Getränkezubereitung, eingesetzt werden.

### Bezugszeichenliste

- 1: Haushaltsgerät
- 2: Tankbehälter
- 3: Brüheinheit
- 4: Leitung
- 5: Filterhalter
- 6: Kanne
- 7: Warmhalteplatte
- 8: Befestigungsvorsprung
- 9: Einfüllöffnung
- 10: Seitenwand
- 11: Bodenabschnitt/Boden
- 12: Seitenwand
- 13: Füllstandsmarkierung
- 14: Profilierung
- 15: Profilierung
- 16: Profilierung
- 17: Seitenwand/Oberfläche
- 18: Boden
- 19: Wölbung
- 20: Lichtstrahl
- 21: Lichtstrahl
- 22: Gehäusewand
- 23: Aufnahme
- 24: Leuchtmittel
- 25: Lichtleiter
- 26: Vorsprung
- 30: Lichtstrahl
- 32: Lichtstrahl
- α: Winkel
- β: Winkel
- d: Wanddicke
- s: Breite der Profilierungen

## Patentansprüche

1. Wassertank für ein Haushaltsgerät (1), insbesondere für die Getränkezubereitung mit einem Tankbehälter (2), der einen Boden (11) und Seitenwände (10, 12) aufweist, wobei an mindestens einer Seitenwand (10) eine Füllstandsmarkierung (13) vorgesehen ist, wobei die Füllstandsmarkierung (13) integral mit der Seitenwand (10) durch eine Profilierung (14, 15, 16) gebildet ist, **dadurch gekennzeichnet, dass** die Profilierung (14, 15, 16) durch eine nutförmige Aussparung gebildet ist.

2. Wassertank nach Anspruch 1, **dadurch gekennzeichnet, dass** die nutförmige Aussparung eine konkave Wölbung (19) aufweist.

3. Wassertank nach Anspruch 1, **dadurch gekennzeichnet, dass** an der Profilierung (14, 15, 16) mindestens eine in einem Winkel größer 30°, insbesondere größer 45°, zur Ebene der Seitenwand (10) ausgerichtete Oberfläche (17) vorgesehen ist.

4. Wassertank nach einem der vorhergehenden Ansprüche, **dadurch gekennzeichnet, dass** der Tankbehälter (2) aus Kunststoff hergestellt ist, vorzugsweise im Spritzgussverfahren.

5. Wassertank nach einem der vorhergehenden Ansprüche, **dadurch gekennzeichnet, dass** der Wassertank (2) zumindest im Bereich der Seitenwand (10) mit den Füllstandsmarkierungen (13) aus transparentem oder transluzentem Material hergestellt ist.

6. Wassertank nach einem der vorhergehenden Ansprüche, **dadurch gekennzeichnet, dass** die Seitenwand des Tankbehälters (2) die Dicke (d) zwischen 2 bis 4 mm besitzt.

7. Wassertank nach einem der vorhergehenden Ansprüche, **dadurch gekennzeichnet, dass** die Tiefe oder Höhe der Profilierung (14, 15, 16) in einem Bereich zwischen 0,2 bis 1 mm, insbesondere 0,4 bis 0,7mm, beträgt.

8. Haushaltsgerät (1), insbesondere für die Zubereitung von Heißgetränken, **dadurch gekennzeichnet, dass** ein Wassertank nach einem der vorhergehenden Ansprüche vorgesehen ist.

9. Haushaltsgerät nach Anspruch 8, **dadurch gekennzeichnet, dass** mindestens ein Leuchtmittel (24) vorgesehen ist, das Licht in eine Seitenwand (10) des Tankbehälters (2) einstrahlt.

10. Haushaltsgerät nach Anspruch 8 oder 9, **dadurch gekennzeichnet, dass** zwischen dem Wassertank (2) und dem Leuchtmittel (24) ein Lichtleiter (25) angeordnet ist.

11. Haushaltsgerät nach Anspruch 10, **dadurch gekennzeichnet, dass** der Lichtleiter (25) im Wesentlichen unterhalb der Füllstandsmarkierung (13) für eine Lichteinleitung in einen Teilabschnitt der Seitenwand (10) sorgt.

12. Haushaltsgerät nach einem der Ansprüche 9 bis 11, **dadurch gekennzeichnet, dass** das Licht im Wesentlichen in Richtung der Ebene der Seitenwand (10) mit den Füllstandsmarkierungen (13) eingestrahlt wird.

13. Haushaltsgerät nach einem der Ansprüche 9 bis 12, **dadurch gekennzeichnet, dass** das in die Seitenwand (10) eingestrahlte Licht im Bereich einer Profilierung (14, 15, 16) der Füllstandsmarkierung (13) in einem Winkel zwischen 30° bis 150°, insbesondere 45° bis 135°, zur Ebene der Seitenwand (10) emittiert wird.

14. Haushaltsgerät nach einem der Ansprüche 8 bis 13, **dadurch gekennzeichnet, dass** das Haushaltsgerät (1) als Kaffeemaschine ausgebildet ist.

## Claims

1. Water tank for a domestic appliance (1), particularly for beverage preparation, with a tank container (2) having a base (11) and side walls (10, 12), wherein a filling level marking (13) is provided at at least one side wall (10) and wherein the filling level marking (13) is formed integrally with the side wall (10) by a profiling (14, 15, 16), **characterised in that** the profiling (14, 15, 16) is formed by a groove-shaped recess.

2. Water tank according to claim 1, **characterised in that** the groove-shaped recess has a concave curvature (19).

3. Water tank according to claim 1, **characterised in that** at least one surface (17) oriented at least at an angle greater than 30°, particularly greater than 45°, with respect to the plane of the side wall (10) is provided at the profiling (14, 15, 16).

4. Water tank according to any one of the preceding claims, **characterised in that** the tank container (2) is made of plastics material, preferably in an injection-moulding method.

5. Water tank according to any one of the preceding claims, **characterised in that** the water tank (2) is made of transparent or translucent material at least in the region of the side wall (10) with the filling level markings (13).

6. Water tank according to any one of the preceding claims, **characterised in that** the side wall of the tank container (2) has a thickness (d) between 2 and 4 millimetres.

7. Water tank according to any one of the preceding claims, **characterised in that** the depth or height of the profiling 14, 15, 16) is in a range between 0.2 millimetres to 1 millimetre, particularly 0.4 to 0.7 millimetres.

8. Domestic appliance (1), particularly for preparation of hot beverages, **characterised in that** a water tank according to any one of the preceding claims is provided.

9. Domestic appliance according to claim 8, **characterised in that** at least one lighting means (24) which radiates light into a side wall (10) of the tank container (2) is provided.

10. Domestic appliance according to claim 8 or 9, **characterised in that** an optical

11. Domestic appliance according to claim 10, **characterised in that** the optical conductor (25) provides, substantially below the filling level marking (13), conduction of light into a sub-section of the side wall (10).

12. Domestic appliance according to any one of claims 9 to 11, **characterised in that** the light is radiated-in substantially in the direction of the plane of the side wall (10) with the filling level markings (13).

13. Domestic appliance according to any one of claims 9 to 12, **characterised in that** the light radiated into the side wall (10) is emitted in the region of a profiling (14, 15,1 6) of the filling level marking (13) at an angle of between 30°and 150°, particularly 45° and 135°, to the plane of the side wall (10).

14. Domestic appliance according to any one of claims 8 to 13, **characterised in that** the domestic appliance (1) is constructed as a coffee machine.

## Revendications

1. Réservoir d'eau pour un appareil ménager (1) en particulier pour la préparation de boissons comprenant un caisson de réservoir (2) comportant un fond (11) et des parois latérales (10, 12), un indicateur de niveau (13) étant prévu sur au moins une paroi latérale (10), cet indicateur de niveau (13) étant formé intégralement avec la paroi latérale (10) par un profilage (14, 15, 16),
**caractérisé en ce que**
le profilage (14, 15, 16) est formé par un évidement en forme de rainure.

2. Réservoir d'eau conforme à la revendication 1,
**caractérisé en ce que**
l'évidement en forme de rainure a une courbure concave (19).

3. Réservoir d'eau conforme à la revendication 1,
**caractérisé en ce que**
sur le profilage (14, 15, 16) est prévue au moins une surface (17) orientée par rapport au plan de la paroi latérale (10) selon un angle supérieur à 30°, en particulier supérieur à 45°.

4. Réservoir d'eau conforme à l'une des revendications précédentes, **caractérisé en ce que**
le caisson de réservoir (2) est réalisé en matériau synthétique de préférence par un procédé de moulage par injection.

5. Réservoir d'eau conforme à l'une des revendications précédentes, **caractérisé en ce que**
au moins dans la zone de la paroi latérale (10) équipée de l'indicateur de niveau (13), le caisson de réservoir (2) est réalisé en un matériau transparent ou translucide.

6. Réservoir de stockage d'eau conforme à l'une des revendications précédentes,
**caractérisé en ce que**
la paroi latérale du caisson de réservoir (2) a une épaisseur (d) comprise entre 2 et 4 mm.

7. Réservoir de stockage d'eau conforme à l'une des revendications précédentes,
**caractérisé en ce que**
la profondeur ou la hauteur du profilage (14, 15, 16) est située dans une plage comprise entre 0,2 et 1 mm, en particulier entre 0,4 et 0,7 mm.

8. Appareil ménager (1) en particulier pour la préparation de boissons chaudes,
caractérisé en e qu'
il comporte un réservoir d'eau conforme à l'une des revendications précédentes.

9. Appareil ménager conforme à la revendication 8,
**caractérisé en ce qu'**
il comporte au moins un agent d'éclairage (24) qui rayonne de la lumière dans une paroi latérale (10) du caisson de réservoir (2).

10. Appareil ménager conforme à la revendication 8 ou 9,
**caractérisé en ce qu'**
un guide de lumière est monté entre le caisson de réservoir (2) et le moyen d'éclairage (24).

11. Appareil ménager conforme à la revendication 10,
**caractérisé en ce que**
le guide de lumière (25) permet d'introduire de la lumière dans un segment partiel de la paroi latérale (10) essentiellement au-dessous de l'indicateur de niveau (13).

12. Appareil ménager conforme à l'une des revendications 9 à 11, **caractérisé en ce que**
la lumière est rayonnée essentiellement en direction du plan de la paroi latérale (10) équipée de l'indicateur de niveau (13).

13. Appareil ménager conforme à l'une des revendications 9 à 12, **caractérisé en ce que**
la lumière rayonnée dans la paroi latérale (10) est émise dans la zone du profilage (14, 15, 16) de l'indicateur de niveau (13) selon un angle compris entre 30° et 150°, en particulier entre 45° et 135° par rapport au plan de la paroi latérale (10).

14. Appareil ménager conforme à l'une des revendications 8 à 13, **caractérisé en ce qu'**
il est réalisé sous la forme d'une machine à café.
